# EUROPEAN PATENT APPLICATION

(11) **EP 1 731 780 A1**
(43) Date of publication of application: **13.12.2006**
(21) Application number: 05425417.2
(22) Date of filing: 09.06.2005
(51) Int. Cl.: F16D 1/09

(54) **Coupling system between an output shaft of a reduction gear and an input shaft of a user device**

(71) Applicant: Tecnoingranaggi Riduttori S.r.l., 40017 S. Giovanni in Persiceto (Bologna) (IT)
(72) Inventor: Cognigni, Enzo, 40129 Bologna (IT)
(74) Representative: Cerbaro, Elena

(57) **Abstract**

A coupling system (100) between an output shaft (12) of a reduction gear (10) and an input shaft (25) of a user device (26). The coupling system (100) includes an elastic bush (22) having a conical portion (22a). In actual use, the conical portion (22a) wedges between the wall of a conical seat (21) on one end (12a) of the output shaft (12) and the outer surface of the input shaft (25). The elastic bush (22) is fixed to the output shaft (12) by screws (30). And the coupling system (100) is characterized by having a reinforcing ring nut (29) fitted to the outer surface (27) of the end (12a) of the output shaft (12).

## Description

The present invention relates to a coupling system between an output shaft of a reduction gear and an input shaft of a user device.

In mechanical power transmission, coupling systems between an output shaft of a reduction gear and an input shaft of a user device are known which comprise an elastic bush having a conical portion. In use, the conical portion is wedged between the wall of a conical seat on one end of the output shaft and the outer surface of the input shaft of the user device; and the elastic bush is fixed to the output shaft by fastening means.

A drawback of known systems, however, lies in the limit to which the thickness of the end wall of the output shaft can be reduced.

That is, if the wall is too thin, the end of the output shaft of the reduction gear is in real danger of being cracked or otherwise damaged by the wedging effect of the conical portion of the bush.

On the other hand, minimizing the thickness of the end of the output shaft has the advantage of increasing the slope of the seat housing the conical portion of the bush and so enabling use of a wider range of user device input shaft diameters.

It is a main object of the present invention, therefore, to reinforce the end of the output shaft of a reduction gear by means of a reinforcing ring nut, so as to maximize the slope of the seat wall to accommodate bushes for housing input shafts of a wide range of diameters.

According to the present invention, there is provided a coupling system as claimed in Claim 1.

A non-limiting embodiment of the present invention will be described by way of example with reference to the accompanying drawings, in which:
Figure 1 shows an overall view of a reduction gear featuring an innovative coupling system in accordance with the present invention;
Figure 2 shows an enlargement of the Figure 1 coupling system.

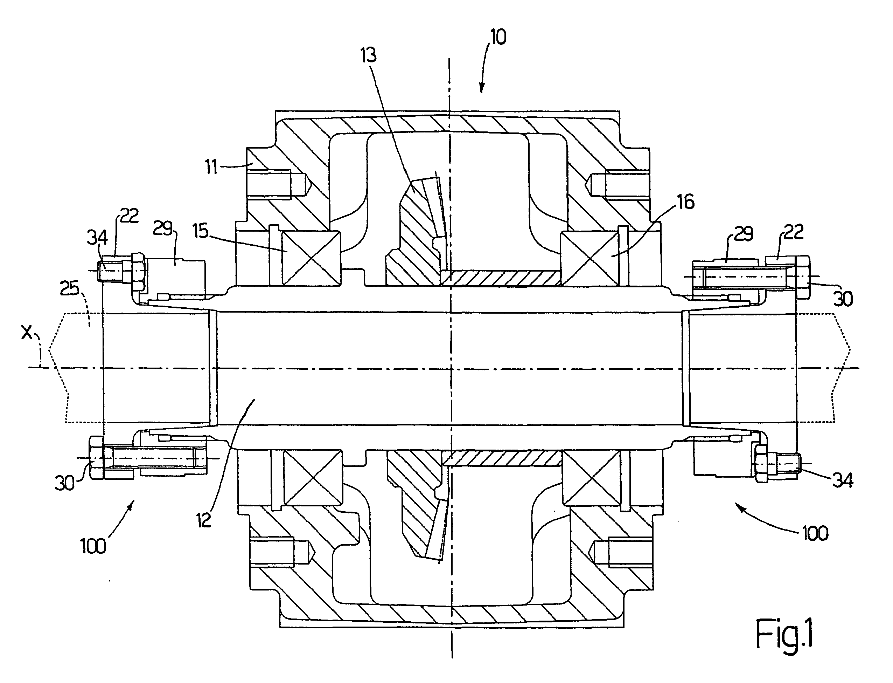

Number 10 in Figure 1 indicates as a whole a reduction gear featuring a coupling system 100 in accordance with the invention.

More specifically, reduction gear 10 forms part of a motor reducer (shown only partly).

Reduction gear 10 comprises in known manner a casing 11 through which extends an output shaft 12 having a longitudinal axis of symmetry X.

Output shaft 12 is fitted with a ring gear 13, which meshes with a bevel pinion (not shown) forming part of a reduction stage of reduction gear 10.

Reduction gear 10 may obviously comprise a number of reduction stages (not shown).

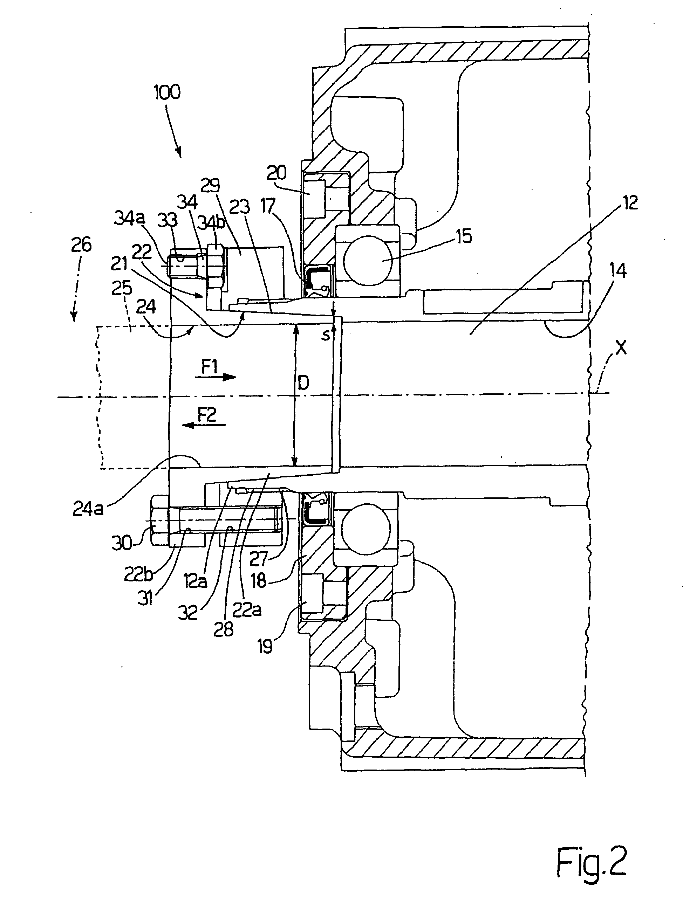

As shown in more detail in Figure 2, shaft 12 is hollow, and comprises a cavity 14.

Shaft 12 is supported in known manner by two ball bearings 15, 16 (Figure 1) housed inside seats in casing 11.

As shown in Figure 2, ball bearing 15 has an oil seal 17 pushed onto ball bearing 15 by a cover 18 screwed to casing 11 by screws 19, 20 (only two shown in Figure 2).

As shown in more detail in Figure 2, output shaft 12 of reduction gear 10 has an end 12a on which a conical seat 21 is formed for the reasons explained below.

Conical seat 21 is designed to receive an elastic bush 22 comprising a conical main body 22a, and a flange 22b integral with conical main body 22a.

More specifically, in actual use, an outer surface 23 of main body 22a rests on the wall of conical seat 21, while an input shaft 25 of a user device 26 (not shown) rests on a wall 24a of a through hole 24 in elastic bush 22.

As shown in Figure 2, an outer surface 27 of end 12a has a thread 28, to which screws a threaded ring nut 29 referred to as a "reinforcing ring nut".

Once shaft 25 is inserted inside elastic bush 22, flange 22b of elastic bush 22 is fixed to ring nut 29 by a number of screws 30 (only one shown in Figure 2). More specifically, each screw 30 is screwed inside a threaded hole 31 formed in flange 22b, and inside a threaded hole 32 formed in ring nut 29.

In other words, output shaft 12 of reduction gear 10 and input shaft 25 of user device 26 are connected mechanically as follows:
- ring nut 29 is screwed onto end 12a;
- elastic bush 22 is inserted inside cavity 14; more specifically, outer surface 23 of main body 22a rests on the wall of conical seat 21 formed in shaft 12;
- input shaft 25 of user device 26 (not shown) rests on inner wall 24 of elastic bush 22;
- each screw 30 is screwed into respective threaded holes 31, 32;
- as screws 30 are tightened, elastic bush 22 advances slightly in the direction indicated by arrow F1;
- bush 22 being elastic, wall 23 of main body 22a pushes on seat 21 and deforms elastically to grip shaft 25 housed inside through hole 24, so that shaft 25 is integral with shaft 12, and any rotation of shaft 12 is transmitted to shaft 25.

Obviously, the wedging effect of bush 22 inside through hole 24, produced by the bush advancing in the direction of arrow F1, would also produce radial deformation of end 12a, which, being fairly thin, could crack longitudinally.

Ring nut 29, however, provides in inventive manner for preventing damage to, and for greatly reinforcing, end 12a.

A coupling system 100 between output shaft 12 of reduction gear 10 and input shaft 25 of user device 26 therefore comprises:
- a reinforcing ring nut 29 screwed to a thread 28 on end 12a of shaft 12; and
- an elastic bush 22 fixed by screws 30 to ring nut 29 and for housing shaft 25 of user device 26.

Flange 22b also comprises a number of threaded holes 33 (only one shown in Figure 2) arranged circumferentially, and in each of which is screwed a respective release screw 34. More specifically, the threaded stem 34a of release screw 34 is screwed inside respective hole 33, and the head 34b of release screw 34 is located between elastic bush 22 and ring nut 29.

To disconnect elastic bush 22 and shaft 25 from shaft 12, therefore, the operator, after unscrewing screws 30, simply unscrews screws 34, using a monkey wrench, so that heads 34b of screws 34 (moving in the direction of arrow F1) press against ring nut 29 (screwed firmly to shaft 12) to produce a release force in the direction of arrow F2 (opposite the direction of arrow F1).

The main advantage of the coupling system according to the present invention lies in reinforcing ring nut 29 enabling a big reduction in the thickness of end 12a of shaft 12.

In other words, the slope of the wall of seat 21 may be increased considerably.

That is, since the minimum thickness S of main body 22a of elastic bush 22 must anyway be sufficient to transmit torque between shaft 12 and shaft 25, the possibility of increasing the slope of the wall of seat 21 (and so reducing the thickness of end 12a of shaft 12) means a wider range of diameters D of shaft 25 may safely be used, with no danger of an excessively thin end 12a cracking under the wedging effect of main body 22a between end 12a of shaft 12 and the surface of shaft 25.

## Claims

1. A coupling system (100) between an output shaft (12) of a reduction gear (10) and an input shaft (25) of a user device (26); the coupling system (100) comprising an elastic bush (22) having a conical portion (22a); said conical portion (22a) wedging between the wall of a conical seat (21) on one end (12a) of said output shaft (12) and the outer surface of said input shaft (25); said elastic bush (22) being fixed to said output shaft (12) by fastening means (30, 31, 32); and the coupling system (100) being **characterized by** comprising a reinforcing ring nut (29) fitted to the outer surface (27) of said end (12a) of said output shaft (12).

2. A coupling system (100) as claimed in Claim 1, **characterized in that** said reinforcing ring nut (29) is screwed to said end (12a) of said output shaft (12).

3. A coupling system (100) as claimed in any one of the foregoing Claims, **characterized in that** said fastening means (30, 31, 32) fix said elastic bush (22) to said reinforcing ring nut (29).

4. A coupling system (100) as claimed in any one of the foregoing Claims, **characterized in that** a flange (22b) of said elastic bush (22) has a number of threaded holes (33) arranged circumferentially; a respective release screw (34) being screwed inside each threaded hole (33), so that, when said release screws (34) are unscrewed, thrust is exerted on said reinforcing ring nut (29) to produce a release force on said elastic bush (22) and said input shaft (25).
